# EUROPEAN PATENT SPECIFICATION

(11) **EP 3 708 476 B1**
(45) Date of publication and mention of the grant of the patent: **06.07.2022**
(21) Application number: 20162185.1
(22) Date of filing: 10.03.2020
(51) Int. Cl.: B62K 25/30, B62K 19/30, B62K 25/28

(54) **FRAME FOR BICYCLE HAVING AN IMPROVED REAR SUSPENSION SYSTEM**
FAHRRADRAHMEN MIT VERBESSERTER HINTERER AUFHÄNGUNG
CADRE DE BICYCLETTE AVEC SUSPENSION ARRIÈRE AMÉLIORÉE

(30) Priority: 13.03.2019 IT 201900003685
(43) Date of publication of application: 16.09.2020
(73) Proprietor: C.S. SNC di Ciapponi P. E Soci, 23017 Morbegno (SO) (IT)
(72) Inventor: CIAPPONI, Patrizio, 23017 Morbegno (SO) (IT)
(74) Representative: Ripamonti, Enrico

(56) References cited:
- DE-A1-102010 037 764
- DE-U1-202017 005 686
- FR-A1- 3 052 433
- US-A- 973 217
- US-A- 5 269 552

## Description

The present invention relates in general to a frame for bicycle provided with a rear suspension system.

Frames for bicycles are known, in particular for bicycles commonly referred to as mountain-bike or MTB, provided with rear suspension systems suitable for allowing a controlled movement, along a given trajectory, of the axis of rotation of the rear wheel with respect to the main triangle of the frame in order to attenuate ground roughness or to soften possible shocks with the ground in the case of jumps and thus to provide an optimum control of the bicycle even in uneven ground conditions.

More specifically, the present invention relates to a frame for bicycle having a four-bar linkage rear suspension scheme, for instance a suspension scheme wherein the lower tubes of the rear triangle of the frame are hinged to the front triangle of the frame so as to be able to oscillate with respect to the front triangle of the frame around a first hinging axis, wherein the lower tubes and the high tubes of the rear triangle of the frame are hinged to one another so as to be able to oscillate between each other around a second hinging axis arranged close or in correspondence with the axis of rotation of the rear wheel, wherein the high tubes of the rear triangle of the frame are hinged at their upper ends to a movable element in such a way as to oscillate with respect to such movable element around a third hinging axis, wherein on such movable element a damper acts, suitable for exerting on the movable element a damping force which tends to counter the upwards oscillation movement of the rear triangle of the frame, and of the axis of rotation of the rear wheel along with it, around a first hinging axis, wherein the first hinging axis is an stationary axis with respect to the front triangle, whereas the second hinging axis and the third hinging axis are movable axes with respect to the front triangle.

In the known four-bar linkage rear suspension schemes, said movable element, which determines the trajectory of said third hinging axis, is typically made up by a pair of rocker arms, each of which is fitted not only into a respective high tube of the rear triangle of the frame, but also into a tube (vertical tube or upper oblique tube) of the front triangle of the frame and one of the two opposed ends of the damper (be it the end of the stem or the end of the cylinder).

FR3052433 discloses a frame for bicycles according to the preamble of claim 1 of the patent text. In particular, this document according to the prior art discloses a frame or front triangle that is pivotably connected to a frame or a rear triangle. The lower tubes and the high tubes (of the rear triangle) are connected to each other through fixing plates.

FR3052433 discloses that the high tubes of the rear triangle are associated with a movable element which is slidingly inserted in the upper oblique tube of the front triangle and cooperates with a damper member, also positioned inside the oblique tube. A screw having nuts secures the high tubes to the movable element; this screw can slide in a guided manner within opposed windows cut in the oblique tube which consequently act as "guiding means" for the movement of the element positioned into the oblique tube.

Therefore, this document according to the prior art discloses that guiding means are directly defined by the same oblique tube of the front triangle of the frame; it follows that the stresses supported by the high tubes are directly and instantaneously transferred to the zone of the oblique tube where the transversal screw which constrains the movable element to said tubes rests on.

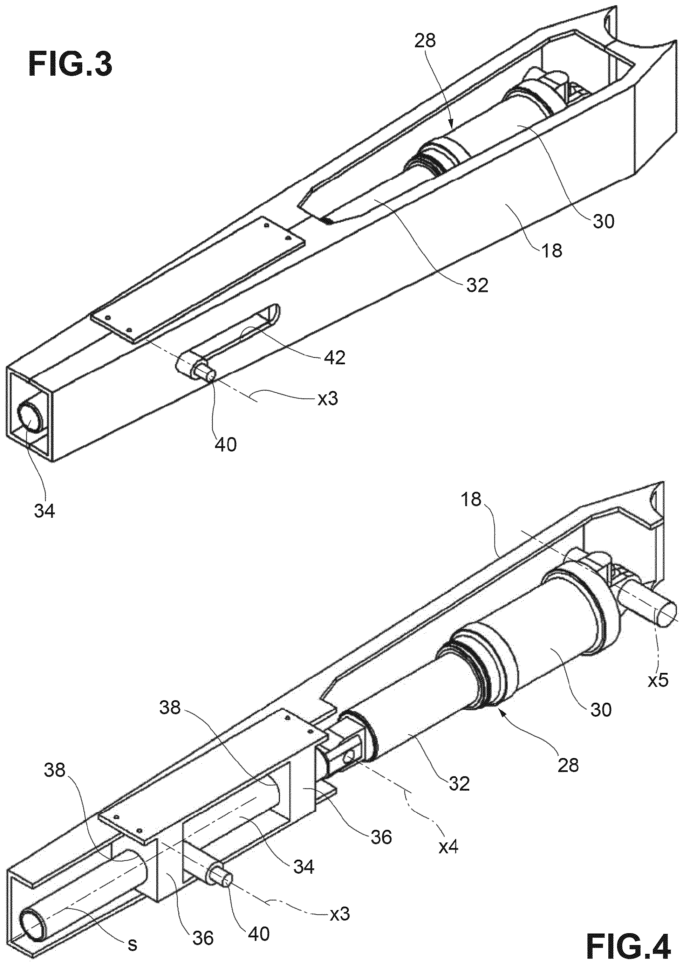

Also DE102010037 discloses a frame for bicycles featuring characteristics similar to that of the frame according to the present invention and specified in the preamble of claim 1 of the present document. As a matter of fact, the prior art document under consideration discloses a bicycle including a front triangle, and a rear triangle pivotably connected to the front one. In connection with the embodiment shown in figure 4, the German text under consideration describes guiding means (a bearing or tube 21) associated with the front triangle wherein a movable element 24 hinged to the damper which is disposed external to the oblique tube, can slide. The bearing or tube 21 is associated with the vertical tube of the front triangle of the frame.

However, in this prior art solution the damper is exposed to atmospheric agents, water or mud eventually present in the route of the bicycle and which might negatively affect the damper operation. Water and mud might also easily penetrate into the tube associated with the front triangle, preventing, or however countering the free movement of the movable element and consequently of the rear triangle of the frame with respect to the front one.

In addition, said tube can also suffer the consequences of shear stresses generated by the movable body bound to the high tube of the rear frame thereinto when the rear wheel suffers blows during the use of the bicycle (if, for instance, the latter moves on an uneven ground), stresses that might break the tube itself.

US5269552 discloses a type of bicycle as that indicated in the introductory section of the present description where the damper and the movable element are positioned external to the bicycle frame and arranged between the vertical tube and the upper oblique tube of the frame.

DE202017005686 discloses a type of bicycle as that indicated in the introductory section of the present document which includes, in the upper oblique tube of the front triangle of its frame, a damper to which is associated a movable element bound via a screw to the high tubes of the rear triangle of the bicycle. This prior art document is also subjected to the same above-described problems as FR3052433.

US973217 discloses a bicycle having a frame including a front triangle and a rear triangle. The high tubes of the rear frame are secured by way of a pin to a movable cylindrical member, countering an elastic member, arranged inside the upper oblique tube of the front triangle (which also contains such elastic member). Also in this case, as stated above with reference to FR3052433, the stresses underwent by the rear wheel of the bicycle directly transfer to the oblique tube exactly in the point where it is crossed by the pin (laterally projecting from an opening cut in the tube itself). This might result in breakages both of the tube and the pin, along with obvious drawbacks.

The aim of the present invention is to provide a frame for bicycle of the above-indicated type, which is capable of providing performances similar to or higher than that of the known frames for bicycle, is simpler or more cost-effective to manufacture and maintain in comparison with the known frames for bicycle, and also exposes in sight a lower number of movable parts in comparison with the known frames for bicycle.

This and other aims are fully achieved according to the present invention thanks to a frame for bicycle featuring the characteristics set forth in attached independent claim 1.

Advantageous embodiments of the invention are set forth in the dependent claims, the content of which is to be construed as an integral part of the following description.

In short, the invention is based on the concept of providing a frame for bicycle of the above-indicated type, also comprising guiding means suitable for guiding the movable element which the high tubes of the rear triangle of the frame are hinged thereto in a sliding way with respect to the front triangle of the frame along a steady axis of movement, and wherein said guiding means are housed internally a tube that forms part of the front triangle of the frame or is secured thereto.

The characteristics and advantages of the present invention will be apparent from the following detailed description, given for merely exemplary, non-limitative purposes with reference to the attached drawings, in which:
figure 1 is a partially transparent side view of a frame for bicycle according to an embodiment of the present invention;
figure 2 is a partially transparent side view of the front triangle of the frame for bicycle depicted in figure 1;
figure 3 is a perspective view of the upper oblique tube of the front triangle depicted in figure 2;
figure 4 is a view similar to that of figure 3, the upper oblique tube being sectioned in half;
figure 5 is a perspective view showing a variant of the movable element and its respective guiding means with respect to the embodiment depicted in figures 1 thru 4, said variant not falling in the scope of the present invention;
figure 6 is a partially transparent side view of a frame for bicycle according to a further embodiment of the present invention;
figure 7 is a partially transparent side view of the front triangle of the frame for bicycle depicted in figure 6; and
figure 8 is a perspective view showing the movable element and the guiding means of the frame for bicycle depicted in figure 6.

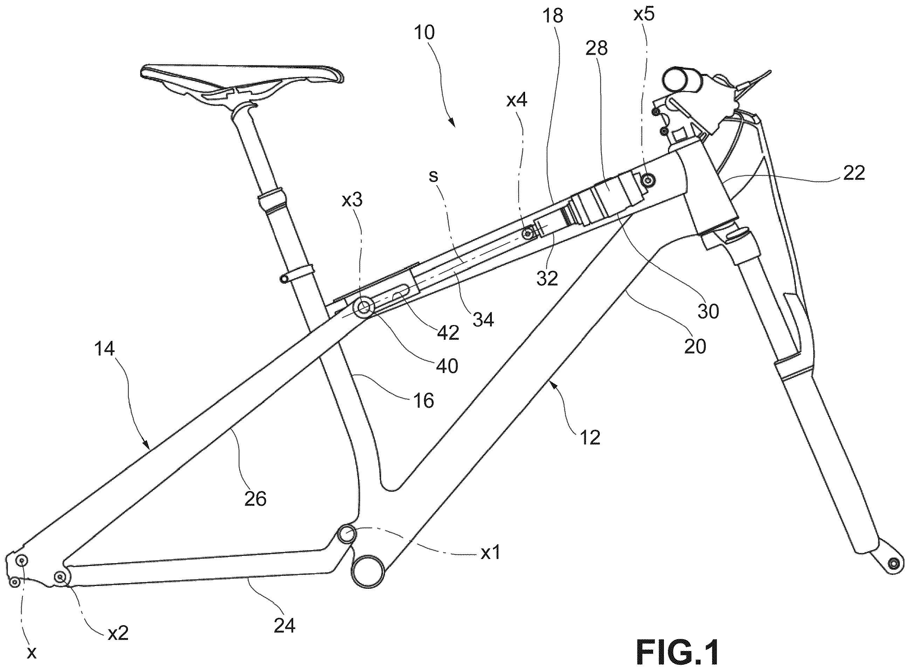

Starting making reference to figure 1, a frame for bicycle according to an embodiment of the present invention is generally identified by reference numeral 10 and basically comprises, in a manner known by itself, a front triangle 12 and a rear triangle 14.

The front triangle 12 comprises a vertical tube, or seatstay, 16, an upper oblique tube 18, a lower oblique tube 20, and a steering tube 22, whereas the rear triangle 14 comprises a pair of lower tubes 24 and a pair of high tubes 26. The side view of figure 1 shows one of the two lower tubes 24 (and specifically the right lower tube) and only one of the two high tubes 26 (and specifically the right high tube).

What will be described hereinafter with reference to the right lower tube 24 and to the right high tube 26, due to the symmetrical configuration of the rear triangle 14 with respect to the longitudinal vertical plane of the frame, is to be construed also applicable to the left lower tube 24 and to the left high tube 26.

The frame 10 is provided with a rear suspension system suitable for making possible a pivoting movement of the axis of rotation, identified by x, of the rear wheel (not shown in the figures) with respect to the front triangle 12 along a given trajectory. In a manner known per se, the rear suspension system comprises a damper 28 having a cylinder 30 and a shank 32 arranged coaxially to the cylinder 30 and slidable with respect to the latter.

The frame 10 features a four-bar linkage rear suspension scheme, in particular a rear suspension scheme wherein the lower tubes 24 of the rear triangle 14 are hinged to the front triangle 12 so as to make it possible to oscillate around a hinging axis x₁, wherein the lower tubes 24 and the high tubes 26 of the rear triangle 14 are hinged to each other in such a way as to allow them to oscillate between each other around a hinging axis x₂ positioned close to the axis of rotation x of the rear wheel, and wherein the high tubes 26 of the rear triangle 14 are hinged at their respective upper ends to a movable element 34 so as to oscillate with respect to the latter around a hinging axis x₃. The hinging axis x₁ is an axis that is stationary with respect to the front triangle 12, whereas the hinging axes x₂ and x₃ are axes movable with respect to the front triangle 12. In particular, the hinging axis x₁ is positioned below the axis of the central movement (identified by x₄), slightly set back from the latter.

The rear damper 28 acts on the movable element 34 so as to exert on the movable element 34 itself a damping force the purpose of which is counter the upwards oscillation movement of the rear triangle 14, and along with it of the axis of rotation x of the rear wheel, around the hinging axis x₁.

More specifically, in the embodiment shown in figure 1 the frame 10 features a rear suspension scheme commonly referred to as Horst scheme, wherein the support pin of the rear wheel is carried by the high tubes 26, and consequently the axis of rotation x of the rear wheel is fixed with respect to the latter, and wherein the support pin of the rear wheel, and hence the axis of rotation x, is also set back and slightly raised with respect to the hinging axis x₂.

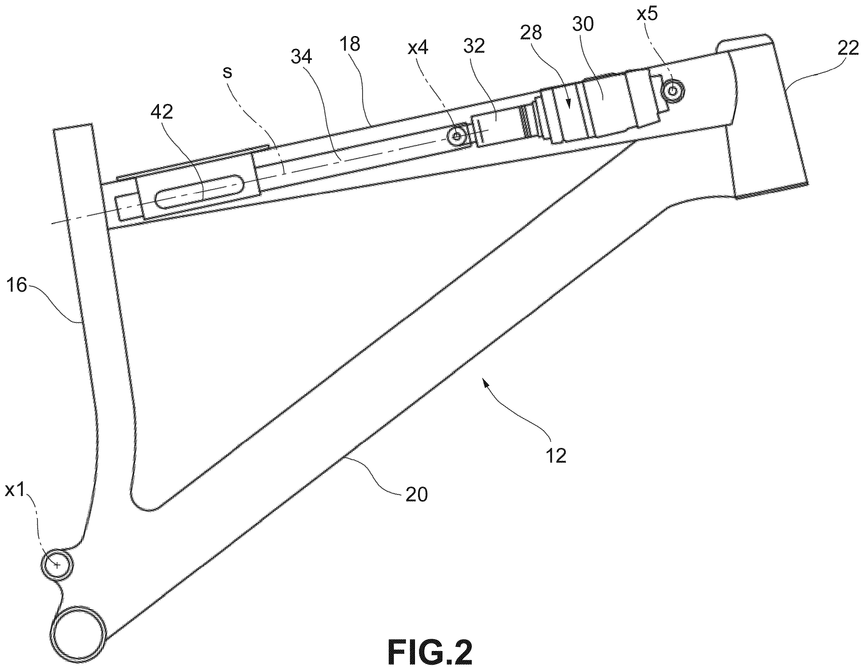

With reference, furthermore and above all, to figures 2 thru 4, in accordance with an aspect of the present invention the movable element 34 is slidably guided along an axis of movement s which is stationary with respect to the front triangle 12, and which in the herein proposed embodiment extends substantially parallel to the longitudinal axis of the upper oblique tube 18. Therefore, also the hinging axis x₃, i.e. the axis around which the high tubes 26 of the rear triangle 14 are hinged to the movable element 34, can translate along said axis of movement s. To this end, the upper oblique tube 18 is provided with guiding means which are housed inside such tube and are formed, in the present embodiment, of at least two support bodies 36 that are arranged transversally to the upper oblique tube 18 and secured to the latter, and have respective guide holes 38 aligned one to another in such a way as to define the axis of movement s. The movable element 34, which in this case is implemented as a circular cross section rod-like element, slides through the guide holes 38 in a guided manner.

A pair of pins 40 is secured to the movable element 34 (only one of which is visible in figures 1, 3, and 4), each of which is used for hinging a respective high tube 26 of the rear triangle 14 to the movable element 34 around the hinging axis x₃. The pins 40 laterally project from sides opposed to the movable element 34 and are guided along their respective slots 42 cut in the upper oblique tube 18, in such a way as to assure parallelism between the hinging axis x₃ to the hinging axes x₁ and x₂ as well as to the axis of rotation x of the rear wheel. The slots 42 might alternatively be formed, rather than in the upper oblique tube 18, in a support structure which forms the support bodies 36. In any case, also in this alternative solution the upper oblique tube 18 should have longitudinal openings suitable for making the pins 40 go out from said tube and move along the axis of movement s along with the movable element 34.

The movable element 34 is hinged at its front end to the rear damper 28 around a hinging axis x₄ parallel to the hinging axis x₃. In this case, the movable element 34 is hinged to the rod 32 of the rear damper 28, but it might indifferently be hinged to the cylinder 30 of the rear damper 28, by reversing the arrangement of the rear damper 28 with respect to what is shown in figures 1 thru 4. The rear damper 28 is hinged, in correspondence with its opposed end (front end), to the upper oblique tube 18 around a hinging axis x₅ parallel to the hinging axis x₃ (hence also parallel to the hinging axis x₄).

So, in this embodiment not only the support bodies 36 which act as guiding means for the movable element 34, but also the movable element 34 itself and the rear damper 28, are housed inside the upper oblique tube 18.

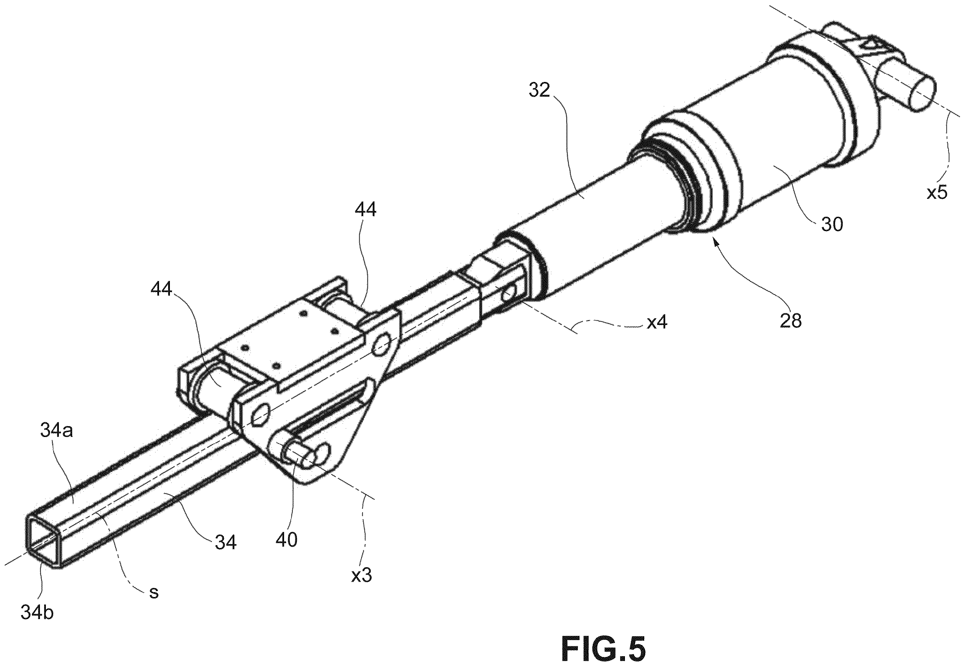

Figure 5, wherein component parts and elements identical or corresponding to that of figures 3 and 4 are identified by the same reference numeral, shows a not claimed embodiment variant of the movable element 34 and of the guiding means through which the movable element 34 is guided along the axis of movement s.

In this case, the movable element 34 is implemented as a rectangular cross section rod-like element, having a pair of flat and parallel faces 34a and 34b, upper and lower respectively, and the guiding means comprise a plurality of rotary idle rollers that rotate around their respective axes of rotation oriented parallel to the hinging axis x₃, for instance a pair of upper rollers 44 in contact with the upper flat face 34a of the movable element 34 and one lower roller (not shown in figure 5) in contact with the lower flat face 34b of the movable element 34. What already explained with reference to figures 1 thru 4 is valid for the remaining part.

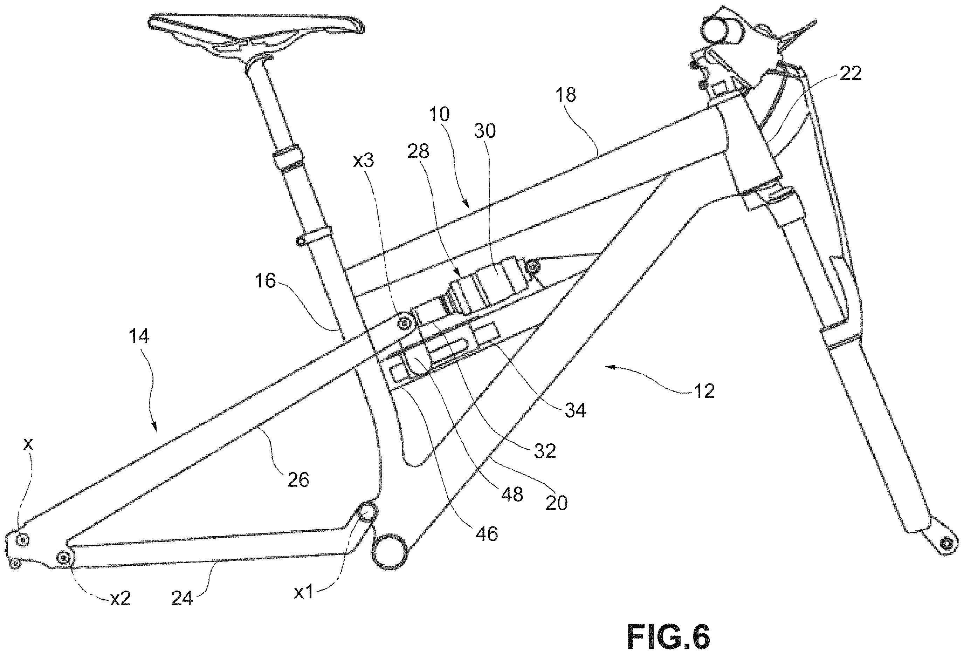

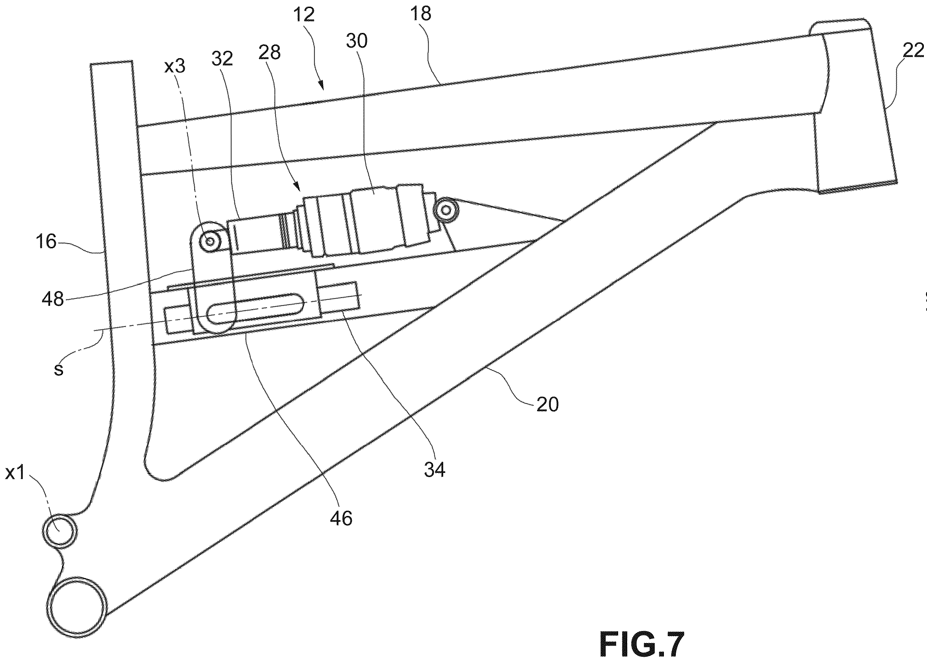

A further embodiment of a frame for bicycle according to the present invention will be now described with reference to figures 6 thru 8, where component parts and elements identical or corresponding to that of the previous figures are identified by the same reference numerals.

The frame 10 according to this further embodiment differs from that illustrated in figures 1 thru 4 both for the arrangement of the movable element 34 and of their respective guiding means, as well as for the arrangement of the rear damper 28. As a matter of fact, in this case the movable element 34 and its relevant guiding means are housed inside a further oblique tube 46 (here below referred to as intermediate oblique tube) of the front triangle 12, which extends below the upper oblique tube 18, between the vertical tube 16 and the lower oblique tube 20.

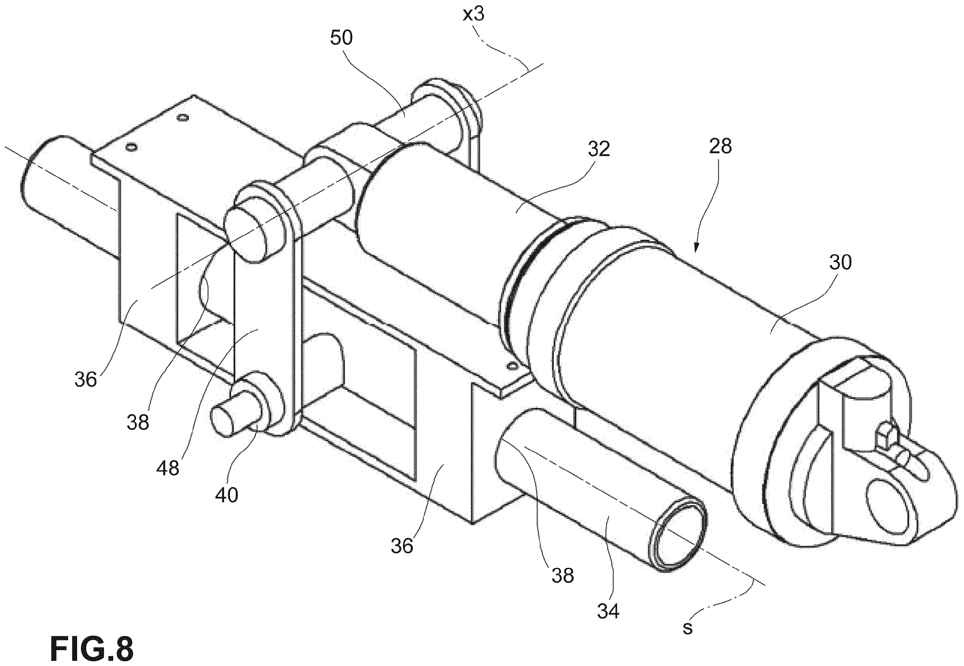

As in the embodiment according to figures 1 thru 4, the movable element 34 is implemented as a circular cross section rod-like element and the guiding means are implemented by support bodies 36 (two support bodies, in the example illustrated) which are internally secured to the intermediate oblique tube 46 and transversally to the latter, and have respective guiding holes 38 aligned one to another in such a way as to define the axis of movement s for the movable element 34. Also, as in the embodiment shown in figures 1 thru 4 the movable element 34 is provided with a pair of pins 40 (only one of which is shown in figure 8) laterally projecting from opposed side with respect to the movable element 34 and guided along their respective slots 42, that in this case are cut in the intermediate oblique tube 46 (or alternatively, as already previously explained with reference to the embodiment shown in figures 1 thru 4, in a support structure which forms the support bodies 36).

Unlike the embodiment shown in figures 1 thru 4, the high tubes 26 of the rear triangle 14 are not hinged to the movable element 34 in correspondence with the pins 40, but rather to a pin 50 mounted at the upper ends of a pair of arms 48 secured to the movable element 34, in particular secured to pins 40. Therefore, in this case the pin 50, and consequently the hinging axis x₃, is positioned externally, in particular above, the intermediate oblique tube 46. Thanks to the rigid connection between the arms 48 and the movable element 34, also in this case the hinging axis x₃ is obliged to move along a rectilinear trajectory, parallel to the axis of movement s.

Finally, unlike the embodiment of figures 1 thru 4, the rear damper 28 is arranged externally the tube (in this case the intermediate oblique tube 46) of the front triangle 12 wherein the movable element 34 slides, and specifically above such tube. In particular, the rear damper 28 is hinged to the movable element 34 in correspondence with the hinging axis itself between the movable element 34 and the high tubes 26 of the rear triangle 14, that is to say in correspondence with the hinging axis x_{3;} in other words, as shown in figure 8, the rear damper 28 is hinged to the above-mentioned pin 50. Also, the rear damper 28 extends substantially parallel to the longitudinal axis of the intermediate oblique tube 46.

Unlike the above-described embodiment, wherein both the movable element with its respective guiding means and the rear damper are housed inside an oblique tube of the front triangle (in particular, inside the upper oblique tube), in the embodiment shown in figures 6 thru 8 the rear damper is arranged outside the oblique tube (in particular, outside the intermediate oblique tube), however, the movable element and its respective guiding means are also in this case housed inside such oblique tube.

In addition to the advantage of being simple and cost-effective to manufacture and maintain and the advantage of exposing in view a number movable parts that is smaller than that exposed in the known frame for bicycle, the frame for bicycle according to the present invention features the important advantage of allowing the rear damper to work better, in that the movable element which the rear damper is connected to moves along a rectilinear trajectory, which substantially is coincident with the axis of the rear damper. Of course, without prejudice of the principle of the invention, the embodiments and implementation details can be widely changed from that described and illustrated by exemplary, non-limitative purposes, without departing from the scope of the invention, as defined in the attached claims.

For example, even though the invention has been described making a special reference to a frame for bicycle having a rear suspension scheme of a Horst type, it must not be considered as limited to such rear suspension scheme, but, on the contrary, it can also be applied to other rear suspension schemes such as, for example, the rear suspension scheme commonly referred to as VPP (Virtual Pivot Point), wherein the high tubes and the lower tubes of the rear triangle are rigidly connected to each other and wherein in addition to said movable element, which is carried by the front triangle and which is hinged to the upper ends of the high tubes, a further movable element is provided, which is implemented in the form of an arm and is hinged on a side to the front triangle, close to the axis of central movement, and on the opposed side to the front ends of the lower tubes of the rear triangle.

## Claims

1. A frame for bicycle provided with a rear suspension system, comprising:
a front triangle (12) having a vertical tube, or seatstay, (16), an upper oblique tube (18), and a lower oblique tube (20);
a rear triangle (14) having a pair of lower tubes (24) and a pair of high tubes (26), the rear triangle (14) being pivotably connected to the front triangle (12) in order to allow a movement of the axis of rotation (x) of the rear wheel of the bicycle along a given trajectory with respect to the front triangle (12);
a movable element (34) which is carried by the front triangle (12) which the high tubes (26) are operatively hinged to in correspondence of their upper ends around a hinging axis (x₃), said movable element (34) being a rod-like element; and
a rear damper (28) connected to said movable element (34) in such a way as to exert on the latter a damping force tending to reduce the oscillations of the rear triangle (14) in comparison with the front triangle (12);
being also provided guiding means (36) suitable for guiding said movable element (34) in a sliding manner with respect to the front triangle (12) along an axis of movement (s) which is fixed with respect to the front triangle (12),
**characterized in that** said guiding means comprise at least two support bodies (36), housed inside a tube (18, 46) and transversally secured to said tube (18, 46) of the front triangle (12), having respective guiding holes (38) aligned to each other so as to define said axis of movement (s), the movable element arranged in said guiding holes (38) sliding within said guiding holes (38) in a guided manner, said tube wherein are placed and secured the guiding means (36) being part of the front triangle (12) or being secured thereto, a support structure forming the support bodies (36), said support structure being secured to the corresponding tube (18, 46).

2. The frame for bicycle according to claim 1, wherein said guiding means (36) are housed inside the upper oblique tube (18).

3. The frame for bicycle according to claim 2, wherein the rear damper (28) is housed inside the upper oblique tube (18).

4. The frame for bicycle according to claim 1, **characterized in that** the rear damper (28) is hinged at an end of said movable element (34).

5. The frame for bicycle according to claim 1, wherein the front triangle (12) also comprises an intermediate oblique tube (46) which extends below the upper oblique tube (18) between the vertical tube (16) and the lower oblique tube (20), and wherein said guiding means (36) are housed inside said intermediate oblique tube (46).

6. The frame for bicycle according to claim 5, wherein the rear damper (28) is arranged externally, in particular above, said intermediate oblique tube (46).

7. The frame for bicycle according to claim 5, wherein the high tubes (26) are hinged to a hinging pin (50), which is arranged externally, in particular above, said intermediate oblique tube (46) and is rigidly connected to said movable element (34).

8. The frame for bicycle according to claim 7, **characterized in that** the rear damper (28) is hinged to said hinging pin.

9. The frame for bicycle according to claim 1, wherein each of the lower tubes (24) is hinged to the front triangle (12) around a hinging axis (x₁) fixed with respect to the front triangle (12), and wherein each of the high tubes (26) is hinged to a respective lower tube (24).

## Patentansprüche

1. Fahrradrahmen, der mit einem Hinterradaufhängungssystem versehen ist, umfassend:
ein vorderes Dreieck (12), das ein vertikales Rohr oder eine Sitzstrebe (16), ein oberes schräges Rohr (18) und ein unteres schräges Rohr (20) aufweist,
ein hinteres Dreieck (14), das ein Paar untere Rohre (24) und ein Paar hohe Rohre (26) aufweist, wobei das hintere Dreieck (14) schwenkbar mit dem vorderen Dreieck (12) verbunden ist, um eine Bewegung der Drehachse (x) des Hinterrads des Fahrrads entlang einer vorgegebenen Bahn in Bezug auf das vordere Dreieck (12) zu ermöglichen,
ein bewegliches Element (34), das von dem vorderen Dreieck (12) getragen wird, an dem die hohen Rohre (26) in Übereinstimmung mit ihren oberen Enden um eine Gelenkachse (x3) funktionsmäßig angelenkt sind, wobei das bewegliche Element (34) ein stangenförmiges Element ist,
und
einen hinteren Stoßdämpfer (28), der mit dem beweglichen Element (34) derart verbunden ist, um auf Letzteres eine Dämpfungskraft auszuüben, die dazu neigt, die Schwingungen des hinteren Dreiecks (14) im Vergleich zum vorderen Dreieck (12) zu reduzieren,
wobei auch Führungsmittel (36) vorgesehen sind, die geeignet sind, das bewegliche Element (34) gleitend in Bezug auf das vordere Dreieck (12) entlang einer Bewegungsachse (s) zu führen, die in Bezug auf das vordere Dreieck (12) fest ist,
**dadurch gekennzeichnet, dass** die Führungsmittel mindestens zwei Stützkörper (36) umfassen, die in einem Rohr (18, 46) untergebracht und quer an dem Rohr (18, 46) des vorderen Dreiecks (12) befestigt sind und entsprechende Führungslöcher (38) aufweisen, die zueinander derart ausgerichtet sind, um die Bewegungsachse (s) zu definieren, wobei das bewegliche Element, das in den Führungslöchern (38) angeordnet ist, in den Führungslöchern (38) geführt gleitet,
wobei das Rohr, in dem die Führungsmittel (36) angeordnet und befestigt sind, Teil des vorderen Dreiecks (12) ist oder daran befestigt ist, wobei eine Stützstruktur die Stützkörper (36) bildet, wobei die Stützstruktur an dem entsprechenden Rohr (18, 46) befestigt ist.

2. Fahrradrahmen nach Anspruch 1, wobei die Führungsmittel (36) im oberen schrägen Rohr (18) untergebracht sind.

3. Fahrradrahmen nach Anspruch 2, wobei der hintere Stoßdämpfer (28) im oberen schrägen Rohr (18) untergebracht ist.

4. Fahrradrahmen nach Anspruch 1, **dadurch gekennzeichnet, dass** der hintere Stoßdämpfer (28) an einem Ende des beweglichen Elements (34) angelenkt ist.

5. Fahrradrahmen nach Anspruch 1, wobei das vordere Dreieck (12) auch ein schräges Zwischenrohr (46) aufweist, das sich unterhalb des oberen schrägen Rohrs (18) zwischen dem vertikalen Rohr (16) und dem unteren schrägen Rohr (20) erstreckt, und wobei die Führungsmittel (36) in dem schrägen Zwischenrohr (46) untergebracht sind.

6. Fahrradrahmen nach Anspruch 5, wobei der hintere Dämpfer (28) außerhalb, insbesondere oberhalb des schrägen Zwischenrohrs (46) angeordnet ist.

7. Fahrradrahmen nach Anspruch 5, wobei die hohen Rohre (26) an einem Gelenkstift (50) angelenkt sind, der außerhalb, insbesondere oberhalb des schrägen Zwischenrohrs (46) angeordnet und starr mit dem beweglichen Element (34) verbunden ist.

8. Fahrradrahmen nach Anspruch 7, **dadurch gekennzeichnet, dass** der hintere Stoßdämpfer (28) an dem Gelenkstift angelenkt ist.

9. Fahrradrahmen nach Anspruch 1, wobei jedes der unteren Rohre (24) an dem vorderen Dreieck (12) um eine Gelenkachse (x₁) angelenkt ist, die in Bezug auf das vordere Dreieck (12) fest ist, und wobei jedes der hohen Rohre (26) an einem jeweiligen unteren Rohr (24) angelenkt ist.

## Revendications

1. Cadre pour bicyclette fourni avec un système de suspension arrière, comprenant :
un triangle avant (12) ayant un tube vertical, ou tube pour la selle, (16), un tube oblique supérieur (18), et un tube oblique inférieur (20) ;
un triangle arrière (14) ayant une paire de tubes inférieurs (24) et une paire de tubes supérieurs (26), le triangle arrière (14) étant relié de manière pivotante au triangle avant (12) afin de permettre un mouvement de l'axe de rotation (x) de la roue arrière de la bicyclette le long d'une trajectoire donnée par rapport au triangle avant (12) ;
un élément mobile (34) porté par le triangle avant (12) auquel les tubes hauts (26) sont articulés de manière fonctionnelle en correspondance avec leurs extrémités supérieures autour d'un axe d'articulation (x3), ledit élément mobile (34) étant un élément en forme de tige ; et
un amortisseur arrière (28) relié audit élément mobile (34) de manière à exercer sur ce dernier une force d'amortissement tendant à réduire les oscillations du triangle arrière (14) par rapport au triangle avant (12) ;
sont également prévus des moyens de guidage (36) aptes à guider ledit élément mobile (34) de manière coulissante par rapport au triangle avant (12) le long d'un axe de déplacement (s) qui est fixe par rapport au triangle avant (12),
**caractérisé en ce que** lesdits moyens de guidage comprennent au moins deux corps de support (36), logés à l'intérieur d'un tube (18, 46) et fixés de manière transversale audit tube (18, 46) du triangle avant (12), ayant des trous de guidage respectifs (38) alignés les uns par rapport aux autres de manière à définir ledit axe de mouvement (s), l'élément mobile disposé dans lesdits trous de guidage (38) coulissant dans lesdits trous de guidage (38) d'une manière guidée, ledit tube dans lequel sont placés et fixés les moyens de guidage (36) faisant partie du triangle avant (12) ou étant fixé à celui-ci, une structure de support formant les corps de support (36), ladite structure de support étant fixée au tube correspondant (18, 46).

2. Cadre pour bicyclette selon la revendication 1, dans lequel lesdits moyens de guidage (36) sont logés à l'intérieur du tube oblique supérieur (18).

3. Cadre pour bicyclette selon la revendication 2, dans lequel l'amortisseur arrière (28) est logé à l'intérieur du tube oblique supérieur (18).

4. Cadre pour bicyclette selon la revendication 1, **caractérisé en ce que** le l'amortisseur arrière (28) est articulé à une extrémité dudit élément mobile (34).

5. Cadre pour bicyclette selon la revendication 1, dans lequel le triangle avant (12) comprend également un tube oblique intermédiaire (46) qui s'étend sous le tube oblique supérieur (18) entre le tube vertical (16) et le tube oblique inférieur (20), et dans lequel lesdits moyens de guidage (36) sont logés à l'intérieur dudit tube oblique intermédiaire (46).

6. Cadre pour bicyclette selon la revendication 5, dans lequel l'amortisseur arrière (28) est disposé extérieurement, notamment au-dessus, dudit tube oblique intermédiaire (46).

7. Cadre pour bicyclette selon la revendication 5, dans lequel les tubes hauts (26) sont articulés sur un axe d'articulation (50), disposé à l'extérieur, en particulier au-dessus, dudit tube oblique intermédiaire (46) et est relié de manière rigide audit élément mobile (34).

8. Cadre pour bicyclette selon la revendication 7, **caractérisé en ce que** l'amortisseur arrière (28) est articulé sur ledit axe d'articulation.

9. Cadre pour bicyclette selon la revendication 1, dans lequel chacun des tubes inférieurs (24) est articulé sur le triangle avant (12) autour d'un axe d'articulation (xl) fixe par rapport au triangle avant (12), et dans lequel chacun des tubes hauts (26) est articulé sur un tube inférieur (24) respectif.
